# FASCICULE DE BREVET EUROPEEN

(11) **EP 0 322 272 B1**
(45) Date de publication et mention de la délivrance du brevet: **07.07.1993**
(21) Numéro de dépôt: 88403109.7
(22) Date de dépôt: 07.12.1988
(51) Int. Cl.: G06F 13/26, G07C 5/10

(54) **Dispositif de transmission d'informations entre plusieurs organes d'un véhicule automobile et une unité centrale de traitement d'informations**
Nachrichtenübertragungsvorrichtung zwischen mehreren Kraftfahrzeugteilen und einer zentralen Datenverarbeitungseinheit
Transmission system between several units of a motor vehicle and a central processing unit

(30) Priorité: 17.12.1987 FR 8717647
(43) Date de publication de la demande: 28.06.1989
(73) Titulaire: AUTOMOBILES PEUGEOT, 75116 Paris (FR); AUTOMOBILES CITROEN, 92200 Neuilly-sur-Seine (FR); REGIE NATIONALE DES USINES RENAULT, 92109 Boulogne-Billancourt (FR)
(72) Inventeur: Lecocq Jean-Luc, F-92310 Sevres (FR); Soria-Mangano, Anselmo, F-78450 Villepreux (FR)
(74) Mandataire: Polus, Camille

(56) Documents cités:
- WO-A-80/01008
- FR-A- 2 416 509
- US-A- 3 289 168
- US-A- 4 013 875
- US-A- 4 063 220

## Description

La présente invention concerne un dispositif d'échange d'informations entre plusieurs organes d'un véhicule automobile et une unité centrale de traitement d'informations.

On connait déjà dans l'état de la technique un certain nombre de dispositifs de transmission de ce type.

Ainsi, par exemple, on connait des dispositifs de transmission qui comportent une unité centrale de traitement d'informations reliée aux différents organes du véhicule par l'intermédiaire d'un ou de plusieurs bus à accès sélectif également appelés bus de type "Polling", assurant la transmission des informations.

L'unité centrale effectue un balayage successif de tous les organes, par exemple de commande, du véhicule, tels que les organes de commande de l'avertisseur, des indicateurs de changement de direction, etc..., et en réponse aux commandes, actionne les organes récepteurs correspondants.

Pour des raisons de sécurité de fonctionnement, il est nécessaire d'assurer une redondance de la transmission des informations entre les organes de commande et l'unité centrale et entre l'unité centrale et les organes récepteurs correspondants. On a donc été amené à développer des systèmes de transmission d'informations fonctionnant en différentiel, ces systèmes comportant des moyens de couplage capacitif afin de permettre un fonctionnement suffisant de ceux-ci même lorsque l'un des fils de transmission de données est perturbé.

Par ailleurs, il est également souhaitable de pouvoir fonctionner à des fréquences de transmission les plus faibles possibles afin d'éviter tous risques de génération d'interférences électromagnétiques et de réduire les coûts de fabrication de tels systèmes.

On connaît déjà dans l'état de la technique par exemple du document US-A-4 013 875, un dispositif de transmission d'informations entre plusieurs organes d'un véhicule automobile et une unité centrale de traitement d'informations.

Dans ce dispositif, l'unité centrale de traitement comprend un ensemble à microprocesseur relié à travers des moyens de multiplexage à des moyens d'entrée/sortie d'informations connectés à des bus auxquels sont raccordés les organes du véhicule.

Il est indiqué dans ce document que les organes du véhicule ont la possibilité d'interrompre le microprocesseur pour gérer le traitement des informations.

Une telle interruption est également décrite dans le document FR-A-2 416 509 qui décrit un dispositif d'introduction d'informations provenant de capteurs numériques.

Cependant, ces dispositifs présentent un certain nombre d'inconvénients, notamment au niveau de la sélectivité des priorités des organes de commande et donc des actions qui en résultent.

En effet, il existe dans un véhicule automobile, des organes de commande assurant des fonctions de caractéristiques d'accès de priorité supérieure tels que par exemple les organes de commande de frein, auxquels le dispositif doit réagir immédiatement pour des raisons de sécurité et des organes de commande tels que par exemple des organes de commande de lève-vitre, etc.., qui assurent des fonctions de caractéristiques d'accès de priorité inférieure.

Dans les dispositifs connus utilisant par exemple des bus de transmission d'informations à accès sélectif, tous les organes de commande sont interrogés les uns après les autres et il n'y a donc pas d'accès prioritaire à l'unité centrale.

Le but de l'invention est donc de résoudre ces problèmes en proposant un dispositif qui permette de séparer les deux types d'organes et de hiérarchiser les commandes à exécuter.

A cet effet, l'invention a pour objet un dispositif d'échange d'informations entre plusieurs organes d'un véhicule automobile et une unité centrale de traitement d'informations, certains organes assurant des fonctions de caractéristiques d'accès de priorité supérieure et d'autres, des fonctions de caractéristiques d'accès de priorité inférieure, caractérisé en ce que l'unité centrale de traitement comprend un ensemble à microprocesseur relié à des premiers moyens de gestion de protocole, eux-mêmes reliés à travers des moyens de multiplexage à des premiers moyens d'entrée/sortie d'informations connectés à des bus d'accès de priorité inférieure du type polling auxquels sont raccordés les organes de caractéristiques d'accès de priorité inférieure, en ce que l'ensemble à microprocesseur est relié à des seconds moyens de gestion de protocole, eux-mêmes reliés à des seconds moyens d'entrée/sortie connectés à un bus d'accès de priorité supérieure de type collision auquel sont raccordés les organes de caractéristiques d'accès de priorité supérieure, la sortie d'accusé de réception des seconds moyens de gestion de protocole étant reliée à une entrée d'interruption de l'ensemble à microprocesseur pour amener celui-ci à traiter en priorité les informations provenant du bus d'accès de priorité supérieure avant de poursuivre le traitement des informations provenant des bus d'accès de priorité inférieure et en ce que la fréquence de transmission d'informations dans le bus d'accès de priorité supérieure est plus faible que la fréquence de transmission d'information dans les bus d'accès de priorité inférieure pour éviter toute pollution par interférence électromagnétique.

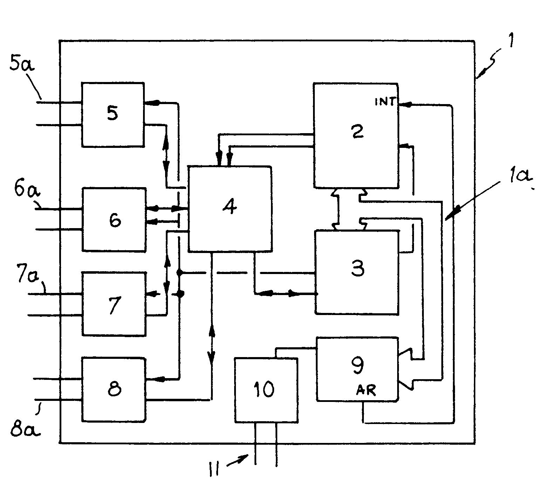

L'invention sera mieux comprise à l'aide de la description qui va suivre, donnée uniquement à titre d'exemple et faite en se référant au dessin annexé, qui représente un shéma synoptique d'un dispositif selon l'invention.

Ainsi qu'on peut le voir sur cette figure, un dispositif de transmission d'informations selon l'invention, entre plusieurs organes (non représentés) d'un véhicule automobile et une unité centrale de traitement d'informations 1 comprend un ensemble à microprocesseur 2 relié à des premiers moyens de gestion de protocole 3 par l'intermédiaire d'une première partie d'un bus 1a. Ces premiers moyens de gestion de protocole 3 sont également reliés à des moyens de multiplexage 4 eux-mêmes reliés à des premiers moyens d'entrée/sortie par exemple au nombre de quatre et référencés respectivement 5,6,7 et 8. Ces moyens d'entrée/sortie d'informations sont connectés à des bus d'accès de priorité inférieure, par exemple 5a, 6a,7a,8a respectivement, auxquels sont raccordés des organes du véhicule assurant des fonctions de caractéristiques d'accès de priorité inférieure, tels que par exemple les phares, l'avertisseur, etc.., qui seront également appelès par la suite organes de caractéristiques d'accès de priorité inférieure.

Ces bus sont en général relativement longs et comportent un certain nombre de dérivations et de connexions permettant de les raccorder à différents organes, et la probabilité de défaillance des fils de données est donc relativement importante tandis que les besoins en débit de transmission sont relativement faibles.

Pour des raisons de sécurité évoquées précédemment, ces bus d'accès de priorité inférieure peuvent être constitués par des bus à accès sélectif encore appelés "polling", à couplage capacitif, leur permettant de fonctionner même lorsque l'un des fils de transmission de données est perturbé.

L'utilisation des moyens de multiplexage 4 permet également de partitionner le bus d'une manière simple et peu coûteuse.

Par ailleurs, l'ensemble à microprocesseur 2 est également relié à des seconds moyens de gestion de protocole 9 par l'intermédiaire d'une seconde partie du bus 1a. Ces seconds moyens de gestion de protocole 9 sont eux-mêmes reliés à des seconds moyens d'entrée/-sortie d'informations 10 connectés à un bus 11 d'accès de priorité supérieure sur lequel sont raccordés des organes assurant des fonctions de caractéristiques d'accès de priorité supérieure du véhicule tels que par exemple la pédale de frein, les COMMODOS, les interfaces avec les systèmes d'anti-blocage de frein, etc., qui seront également appelés organes de caractéristiques d'accès de priorité supérieure.

Ce bus 11 est en fait un bus court disposé dans une zone protégée reliant l'unité centrale de traitement à la planche de bord du véhicule où les besoins en temps de réponse sont en général très courts.

De plus, ce bus est de par sa position dans le véhicule, relativement proche de l'antenne de la radio de celui-ci et représente donc le cas le plus défavorable de pollution par interférences électromagnétiques. Il est donc nécessaire d'avoir des temps d'accès très rapides avec une fréquence de transmission faible pour remplir ces différentes conditions.

La sortie d'accusé de réception AR des seconds moyens de gestion de protocole 9 est reliée à une entrée INT d'interruption de l'ensemble à microprocesseur pour amener celui-ci à traiter en priorité les informations provenant du bus d'accès de priorité supérieure 11 avant de poursuivre le traitement des informations provenant des bus d'accès de priorité inférieure.

Ainsi, en fonctionnement classique, l'ensemble à microprocesseur assure la gestion des informations provenant des organes de caractéristiques d'accès de priorité inférieure et transitant par les bus 5a,6a,7a et 8a par exemple à accès sélectif.

Si un organe de caractéristiques d'accès de priorité supérieure émet une information sur le bus 11, les seconds moyens de gestion de protocole 9 émettent un signal d'interruption de l'ensemble à microprocesseur dont les sous-programmes de gestion d'interruptions assurent alors le traitement de l'information provenant du bus 11.

On conçoit donc que les commandes émises sur le bus 11 par les organes de caractéristiques d'accès de priorité supérieure, sont traitées en priorité par l'ensemble à microprocesseur qui interrompt à la demande des seconds moyens de gestion de protocole 9, le traitement des informations provenant des bus d'accès de priorité inférieure.

Il est à noter que les vitesses de transmission d'informations, c'est à dire les fréquences de travail, dans les bus de priorité inférieure et le bus de priorité supérieure peuvent être différentes afin d'adapter cette transmission à l'environnement comme cela a été mentionné précédemment.

## Revendications

1. Dispositif d'échange d'informations entre plusieurs organes d'un véhicule automobile et une unité centrale de traitement d'informations (1), certains organes assurant des fonctions de caractéristiques d'accès de priorité supérieure et d'autres, des fonctions de caractéristiques d'accès de priorité inférieure, caractérisé en ce que l'unité centrale de traitement (1) comprend un ensemble à microprocesseur (2) relié à des premiers moyens (3) de gestion de protocole, eux-mêmes reliés à travers des moyens de multiplexage (4) à des premiers moyens d'entrée/sortie d'informations (5,6,7,8) connectés à des bus d'accès de priorité inférieure (5a,6a,7a,8a) du type polling auxquels sont raccordés les organes de caractéristiques d'accès de priorité inférieure, en ce que l'ensemble à microprocesseur (2) est relié à des seconds moyens (9) de gestion de protocole, eux-mêmes reliés à des seconds moyens d'entrée/sortie (10) connectés à un bus d'accès de priorité supérieure (11) de type collision auquel sont raccordés les organes de caractéristiques d'accès de priorité supérieure, la sortie d'accusé de réception (AR) des seconds moyens (9) de gestion de protocole étant reliée à une entrée d'interruption (INT) de l'ensemble à microprocesseur (2) pour amener celui-ci à traiter en priorité les informations provenant du bus d'accès de priorité supérieure (11) avant de poursuivre le traitement des informations provenant des bus d'accès de priorité inférieure (5a,6a,7a,8a) et en ce que la fréquence de transmission d'informations dans le bus d'accès de priorité supérieure est plus faible que la fréquence de transmission d'information dans les bus d'accès de priorité inférieure pour éviter toute pollution par interférence électromagnétique.

2. Dispositif selon la revendication 1, caractérisé en ce que lesdits bus d'accès de priorité inférieure (5a, 6a,7a, 8a) sont à couplage capacitif.

## Claims

1. Device for information exchange between several elements of a motor vehicle and a central information processing unit (1), some elements carrying out functions having high-priority access characteristics, and others, functions having low-priority access characteristics, characterised in that the central processing unit (1) comprises a microprocessor assembly (2) linked to first protocol management means (3), themselves linked via multiplexing means (4) to first information input/output means (5, 6, 7, 8) connected to low-priority access buses (5a, 6a, 7a, 8a) of the polling type to which are connected the elements having low-priority access characteristics, in that the microprocessor assembly (2) is linked to second protocol management means (9), themselves linked to second input/output means (10) connected to a collision-type high-priority access bus (11) to which are connected the elements having high-priority access characteristics, the reception acknowledgement output (AR) of the second protocol management means (9) being linked to an interrupt input (INT) of the microprocessor assembly (2) in order to cause the latter to process the information originating from the high-priority access bus (11) in priority, before carrying on with the processing of the information originating from the low-priority access buses (5a, 6a, 7a, 8a) and in that the information transmission frequency in the high-priority access bus is lower than the information transmission frequency in the low-priority access buses in order to avoid any pollution by electromagnetic interference.

2. Device according to claim 1, characterised in that the said low-priority access buses (5a, 6a, 7a, 8a) are capacitively coupled.

## Patentansprüche

1. Vorrichtung zum Austausch von Information zwischen mehreren Einrichtungen eines Kraftfahrzeugs und einer zentralen Informationsverarbeitungseinheit (1), wobei bestimmte Einrichtungen für Funktionen mit niedrigeren Zugriffsprioritätseigenschaften und andere für Funktionen mit höheren Zugriffsprioritätseigenschaften sorgen, dadurch gekennzeichnet, daß die zentrale Verarbeitungseinheit (1) einen Mikroprozessoraufbau (2) aufweist, der mit ersten Mitteln (3) zur Protokollführung verbunden ist, die ihrerseits über Multiplexmittel (4) mit ersten Informationseingangs/ausgangsmitteln (5, 6, 7, 8) verbunden sind, die an Busse niedrigerer Zugriffspriorität (5a, 6a, 7a, 8a) des Aufruf-Typs angeschlossen sind, an welche die Einrichtungen mit niedrigeren Zugriffsprioritätseigenschaften angeschlossen sind, daß der Mikroprozessoraufbau (2) mit zweiten Protokollführungsmitteln (9) verbunden ist, die ihrerseits mit zweiten Eingangs/Ausgangsmitteln (10) verbunden sind, die mit einem Bus höherer Zugriffspriorität (11) vom Kollisionstyp verbunden sind, an welchen die Einrichtungen mit Zugriffseigenschaften höherer Priorität verbunden sind, wobei der Rückmeldungsausgang (AR) der zweiten Protokollführungsmittel (9) mit dem Unterbrechungseingang (INT) des Mikroprozessoraufbaus (2) verbunden ist, um diesen zu veranlassen, mit Priorität die Information zu verarbeiten, die von dem Bus höherer Zugriffspriorität (11) kommt, bevor er die Bearbeitung von Information, die von Bussen niedrigerer Zugriffspriorität (5a, 6a, 7a, 8a) kommt, fortsetzt, und daß die Informationsübertragungsfrequenz in dem Bus mit höherer Zugriffspriorität geringer als die Informationsübertragungsfrequenz in den Bussen mit niedrigerer Zugriffspriorität ist, um eine Verunreinigung durch elektromagnetische Einstreuung zu vermeiden.

2. Vorrichtung nach Anspruch 1, dadurch gekennzeichnet, daß die Busse mit niedrigerer Zugriffspriorität (5a, 6a, 7a, 8a) Busse mit kapazitiver Kopplung sind.
